# EUROPÄISCHE PATENTSCHRIFT

(11) **EP 1 447 578 B1**
(45) Veröffentlichungstag und Bekanntmachung des Hinweises auf die Patenterteilung: **19.12.2012**
(21) Anmeldenummer: 04002742.7
(22) Anmeldetag: 07.02.2004
(51) Int. Cl.: F16C 3/08

(54) **Kurbelwelle mit einer Kerbe**
Crankshaft featuring a notch
Vilebrequin présentant une encoche

(30) Priorität: 13.02.2003 AT 802003 U
(43) Veröffentlichungstag der Anmeldung: 18.08.2004
(73) Patentinhaber: GE Jenbacher GmbH & Co OG, 6200 Jenbach (AT)
(72) Erfinder: Toplack, Georg, 85716 Unterschleissheim (DE)
(74) Vertreter: Torggler, Paul Norbert

(56) Entgegenhaltungen:
- AT-U1- 1 217
- FR-A- 799 099
- PATENT ABSTRACTS OF JAPAN Bd. 1995, Nr. 11, 26. Dezember 1995 (1995-12-26) -& JP 07 217638 A (NISSAN MOTOR CO LTD), 15. August 1995 (1995-08-15)

## Beschreibung

Die vorliegende Erfindung betrifft eine Kurbelwelle, insbesondere eines Verbrennungsmotors, mit einer gedachten Drehachse, um die die Kurbelwelle im eingebauten Zustand drehbar ist und mit mindestens einer Kerbe in mindestens einem Kurbelzapfen und/oder in mindestens einem Wellenzapfen, und mit einem abgerundeten Übergang zwischen einer Kurbelwange und dem Kurbelzapfen und/oder einer Kurbelwange und dem Wellenzapfen.

Kurbelwellen stellen das Herzstück einer jeden Hubkolbenmaschine (Verbrennungsmotor) dar und müssen daher dauerfest ausgelegt werden. Aufgrund der gekröpften Ausführung der Kurbelwelle ist ein sehr ungleichförmiger Kraftfluss nicht zu vermeiden, sodass insbesondere in den Übergangsradien zwischen dem Kurbelzapfen und der Kurbelwange und/oder zwischen dem Wellenzapfen und der Kurbelwange, welche einen sehr scharfen Knick darstellen, hohe Spannungskonzentrationen auftreten. Diese führen bei Überlastung zum Bruch der Kurbelwelle und damit zum Totalausfall des Verbrennungsmotors. Hieraus folgt, dass einerseits eine bestehende Maschinenbaureihe leistungsmäßig beschränkt ist und andererseits eine neu zu konstruierende Maschinenbaureihe nach dem derzeitigen Stand der Technologie durch große Kurbelwellendimensionen für hohe Leistungen ausgelegt werden muss, oder durch festigkeitssteigernde Maßnahmen wie Randschichthärten, Schlagverfestigen bzw. Festwalzen der Oberflächen ein Bruch der Kurbelwelle verhindert werden muss. Der entsprechende Materialeinsatz ist angesichts der beschränkten Reserven und hohen Kosten nicht zeitgemäß.

Um die hohen Spannungskonzentrationen am Übergang zwischen Kurbelwange und Kurbelzapfen zu vermindern, ist es beim Stand der Technik aus der AT 001 217 U1 bereits bekannt, eine Kerbe im Kurbelzapfen vorzusehen, wobei nicht 24 unterscheiden ist zwischen kerbe und abgerundetem Übergang zwischen Kurbelzapfen und Kurbeiwange. Aus der FR 799 099 A ist bekannt, im abgerundetem Übergang Schlitze mit Bohrnngen vorzusehen. Auch diese technischen Verbesserungen führen letztendlich jedoch nicht zu der gewünschten Verminderung der Spannungskonzentration;

Aufgabe der vorliegenden Erfindung ist es daher, eine gattungsgemäße Kurbelwelle zu schaffen, bei der die Spannungskonzentrationen am Übergang zwischen Kurbelwange und Kurbelzapfen bzw. am Übergang zwischen Kurbelwange und Wellenzapfen weiter vermindert sind.

Dies wird erfindungsgemäß dadurch erreicht, dass eine Kerbe teilweise im Bereich des abgerundeten Übergangs und teilweise im Kurbelzapfen auf der zur gedachten Drehachse nach innen zeigenden Seite im Kurbelzapfen und/oder eine Kerbe teilweise im Bereich des abgerundeten Übergangs und teilweise im Wellenzapfen angeordnet ist.

Mit anderen Worten ist somit erfindungsgemäß vorgesehen, dass die Kerbe im Kurbelzapfen und/oder Wellenzapfen angeordnet ist und dabei zumindest teilweise in den abgerundeten Übergang zwischen Kurbelzapfen und Kurbelwange und/oder Wellenzapfen und Kurbelwange hineinreicht. Nur durch diese erfindungsgemäße Anordnung der Kerbe wird eine effiziente Verringerung der am Übergang zwischen Kurbelzapfen und Kurbelwange bzw. zwischen Wellenzapfen und Kurbelwange auftretenden Spannungskonzentrationen erreicht. Die Kurbelwelle kann damit auch bei höheren Leistungen kleiner dimensioniert werden, ohne dass hierzu weitere festigkeitssteigernde Maßnahmen nötig wären Dies ist besonders günstig bei großen Verbrennungsmotoren, wie zum Beispiel stationären Gasmotoren zum Antrieb von Generatoren oder dergleichen.

Einzelheiten der vorliegenden Erfindung ergeben sich aus der nachfolgenden Figurenbeschreibung. Dabei zeigt:
- Fig. 1: einen Teil eines erfindungsgemäßen Ausführungsbeispiels einer Kurbelwelle mit Kurbelzapfen, Kurbelwange und Wellenzapfen,
- Fig. 2: eine Detailansicht zu Fig. 1 im Bereich der erfindungsgemäß angeordneten Kerbe und
- Fig. 3: einen Teil eines Schnittes entlang der Linie AA aus Fig. 1.

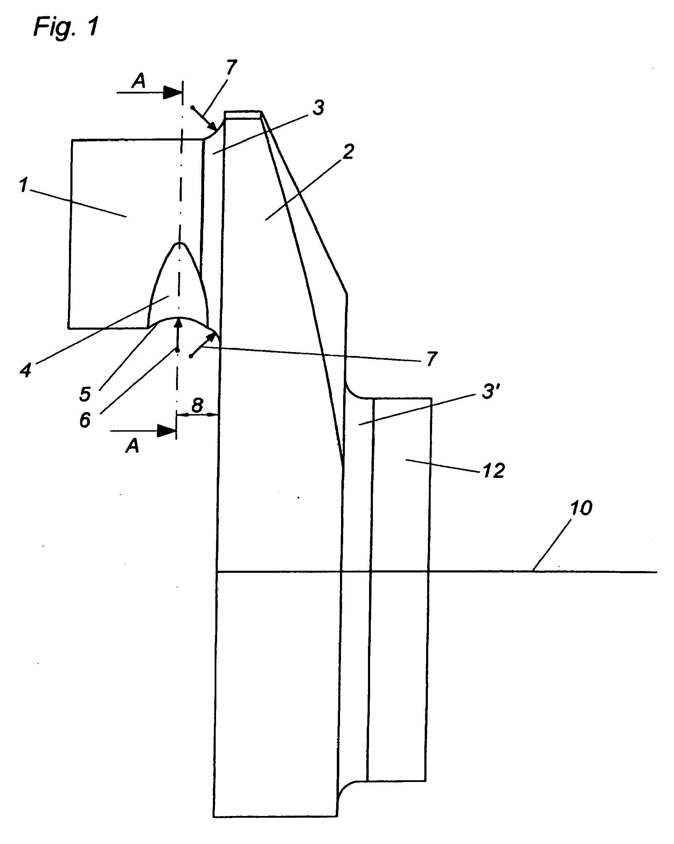

In Fig. 1 ist ein Abschnitt einer Kurbelwelle mit einem Kurbelzapfen 1, einer Kurbelwange 2 und einem Wellenzapfen 12 dargestellt. Zwischen Kurbelzapfen 1 und Kurbelwange 2 befindet sich ein abgerundeter Übergang 3. Entsprechend ist ein abgerundeter Übergang 3' zwischen dem Wellenzapfen 12 und der Kurbelwange 2 angeordnet. Erfindungsgemäß ist eine Kerbe 4 im Kurbelzapfen 1 in der Weise angeordnet, dass sie teilweise in den abgerundeten Übergang 3 hineinreicht. Die Kerbe 4 ist auf der zur gedachten Drehachse 10 der Kurbelwelle (nach innen) zeigenden Seite im Kurbelzapfen 1 angeordnet. Die Kerbe 4 weist bevorzugt in einem gedachten Schnitt durch die Kurbelwange 2 und den Kurbelzapfen 1, vorzugsweise im Bereich der größten Tiefe 9 der Kerbe 4, im wesentlichen die Form eines Kreisbogensegmentes 5 auf. Der Radius 6 des Kreisbogensegmentes 5 ist günstigerweise größer als der Radius 7 des abgerundeten Übergangs 3. Hierbei ist darauf hinzuweisen, dass auch Abweichungen vom exakten Verlauf eines Kreisbogensegmentes sowohl bei der Kerbe 4 als auch beim Übergangsradius 3 möglich sind. In diesen Fällen sind die hier über die Radien 6 und 7 definierten bevorzugten Größenverhältnisse und Dimensionierungen entsprechend anzuwenden. Die Entfernung 8 des Mittelpunktes des Kreisbogensegmentes 5 von der Kurbelwange 2 ist günstigerweise kleiner oder gleich der Summe des Radius 7 des abgerundeten Überganges 3 und des halben Radius 6 des Kreisbogensegmentes 5.

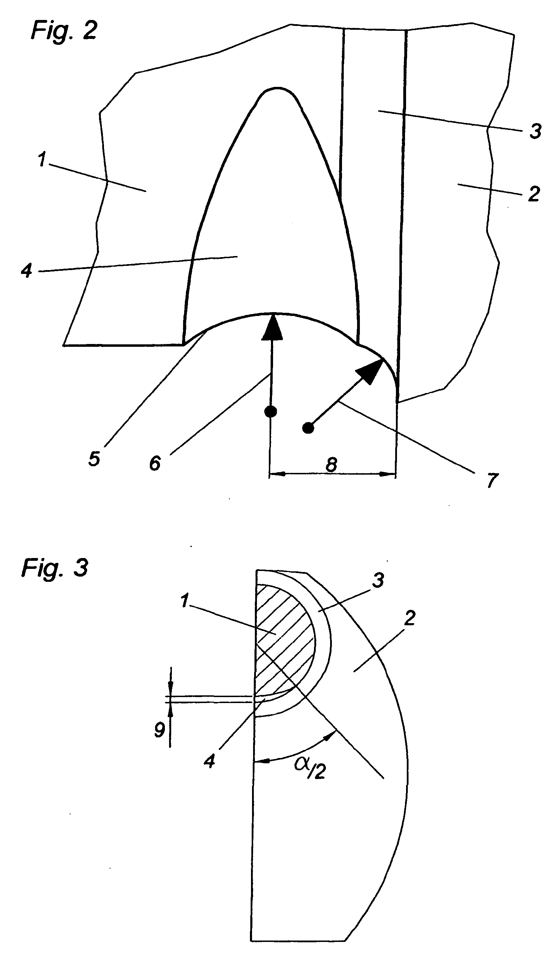

Fig. 2 zeigt die Kerbe 4 sowie den abgerundeten Übergang 3 noch einmal im Detail.

Fig. 3 zeigt einen Schnitt entlang der Geraden AA aus Fig. 1 in einer Draufsicht aus Richtung der in Fig. 1 dargestellten Pfeile, wobei nur eine Hälfte der Kurbelwange dargestellt ist. Die Kerbe 4 erstreckt sich über einen Öffnungswinkel a zwischen 30° und 150°, vorzugsweise zwischen 60° und 120°, im Kurbelzapfen 1. Der Winkel ist hierbei bezüglich des Mittelpunktes des Kurbelzapfens 1 definiert. Fig. 3 zeigt aufgrund der gewählten Darstellung lediglich den halben Öffnungswinkel ^{α}/₂. Wie in Fig. 3 des weiteren dargestellt, ist es günstig, wenn die Tiefe der Kerbe 4 zu den Rändern der Kerbe 4 hin kontinuierlich abnimmt.

Die anhand einer in dem Kurbelzapfen 1 angeordneten Kerbe 4 gezeigten Ausgestaltungsformen sind analog auf eine ebenfalls erfindungsgemäß, teilweise im Übergangsradius 3' und teilweise im Wellenzapfen 12 angeordnete Kerbe 4 übertragbar, ohne dass diese Varianten explizit dargestellt sind. Die anhand der Figuren gezeigten geometrischen Verhältnisse können unmittelbar angewendet werden. Die Kerbe 4 ist hierbei günstigerweise auf der zum benachbarten Kurbelzapfen 1 weisenden Seite im Wellenzapfen 12 angeordnet.

Durch die erfindungsgemäße, teilweise den abgerundeten Übergang 3 und/oder 3' überdeckende Anordnung der Kerbe 4, befindet sich diese nahe genug am kritischen Übergangsradius, sodass durch sie die Oberfläche lokal vergrößert wird und Dehnungen übernommen werden können. Durch diese Maßnahme wird der Kraftfluss verbessert. Die lokalen Spannungen werden reduziert, ohne dass dies eine funktionelle Änderung bzw. Beeinträchtigung der Kurbelwelle nach sich ziehen würde. Eine weitere Festigkeitssteigerung kann bei Bedarf durch Einsatz der beim Stand der Technik bekannten festigkeitssteigernden Maßnahmen wie zum Beispiel Randschichthärten, Schlagverfestigen oder Festwalzen der Oberfläche erreicht werden. Dies ist in der Regel jedoch nicht nötig. Abschließend wird noch darauf hingewiesen, dass günstigerweise an jedem abgerundeten Übergang 3, 3' der Kurbelwelle eine Kerbe 4 erfindungsgemäß angeordnet ist.

## Patentansprüche

1. Kurbelwelle, insbesondere eines verbrennungsmotors, mit einer gedachten Drehachse (10), um die die Kurbelwelle im eingebauten Zustand drehbar ist und mit mindestens einer Kerbe (4) in mindestens einem Kurbelzapfen (1) und/oder in mindestens einem Wellenzapfen (12), und mit einem abgerundeten Übergang (3, 3') zwischen einer Kurbelwange (2) und dem Kurbelzapfen (1) und/oder einer Kurbelwange (2) und dem Wellenzapfen (12), **dadurch gekennzeichnet, dass** die Kerbe (4) teilweise im Bereich des abgerundeten Übergangs (3) und teilweise im Kurbelzapfen (1) auf der zur gedachten Drehachse (10) nach innen zeigenden Seite im Kurbelzapfen (1) und/oder die Kerbe (4) teilweise im Bereich des abgerundeten Übergangs (3') und teilweise im Wellenzapfen (12) angeordnet ist.

2. Kurbelwelle nach Anspruch 1, **dadurch gekennzeichnet, dass** die Kerbe (4) sich über einen Öffnungswinkel a zwischen 30° und 150°, vorzugsweise zwischen 60° und 120°, erstreckt.

3. Kurbelwelle nach Anspruch 2, **dadurch gekennzeichnet, dass** die Tiefe der Kerbe (4) zu den Rändern der Kerbe (4) hin kontinuierlich abnimmt.

4. Kurbelwelle nach einem der Ansprüche 1 bis 3, **dadurch gekennzeichnet, dass** die Kerbe (4) in einem gedachten Schnitt durch Kurbelwange (2) und Kurbelzapfen (1) und/oder Wellenzapfen (12), vorzugsweise im Bereich der größten Tiefe (9) der Kerbe (4), im wesentlichen die Form eines Kreisbogensegmentes (5) aufweist.

5. Kurbelwelle nach Anspruch 4, **dadurch gekennzeichnet, dass** der Radius (6) des Kreisbogensegmentes (5) größer als der Radius (7) des abgerundeten Übergangs (3, 3') ist.

6. Kurbelwelle nach Anspruch 4 oder 5, **dadurch gekennzeichnet, dass** die Entfernung (8) des Mittelpunktes des Kreisbogensegmentes (5) von der Kurbelwange (2) kleiner oder gleich der Summe des Radius (7) des abgerundeten Überganges (3, 3') und des halben Radius (6) des Kreisbogensegmentes (5) ist.

## Claims

1. A crank shaft, in particular of a combustion motor, comprising an imagined axis of rotation (10) about which the crank shaft is rotatable in the mounted condition and comprising at least one notch (4) in at least one crank pin (1) and/or in at least one shaft pin (12) and comprising a rounded transition piece (3, 3') between a crank web (2) and the crank pin (1) and/or a crank web (2) and the shaft pin (12), **characterized in that** the notch (4) is arranged partially in the area of the rounded transition piece (3, 3') and partially in the crank pin (1) on the side of the crank pin (1) facing inwardly on the imagined axis of rotation (10) and/or the notch (4) is arranged partially in the area of the rounded transition piece (3') and partially in the shaft pin (12).

2. A crank shaft according to claim 1, **characterized in that** the notch (4) extends across an opening angle α of between 30° and 150°, preferably of between 60° and 120°.

3. A crank shaft according to claim 2, **characterized in that** the depth of the notch (4) continually decreases towards the edges of the notch (4).

4. A crank shaft according to one of claims 1 to 3, **characterized in that** the notch (4) in an imagined cross section through the crank web (2) and crank pin (1) and/or shaft pin (12), preferably in the area of the greatest depth (9) of the notch (4), shows essentially the shape of a segment of a circular arc (5).

5. A crank shaft according to claim 4, **characterized in that** the radius (6) of the segment of a circular arc (5) is greater than the radius (7) of the rounded transition (3, 3').

6. A crank shaft according to claim 4 or 5, **characterized in that** the distance (8) of the centre point of the segment of a circular arc (5) from the crank web (2) is less or equal the total of the radius (7) of the rounded transition piece (3, 3') and half the radius (6) of the segment of a circular arc (5).

## Revendications

1. Vilebrequin, en particulier d'un moteur à combustion interne, comportant un axe de rotation (10) imaginaire, autour duquel le vilebrequin est apte à tourner à l'état monté, et comportant au moins une entaille (4) dans au moins un maneton (1) et/ou dans au moins un tourillon (12), et comportant une zone de transition (3, 3') arrondie entre un flasque (2) du vilebrequin et le maneton (1) et/ou entre un flasque (2) du vilebrequin et le tourillon (12), **caractérisé en ce que** ladite entaille (4) est ménagée en partie dans la région de la zone de transition (3) arrondie et en partie dans le maneton (1) sur le côté, dans le maneton (1), orienté vers l'intérieur vers l'axe de rotation (10) imaginaire et/ou ladite entaille (4) est ménagée en partie dans la région de la zone de transition (3') arrondie et en partie dans le tourillon (12).

2. Vilebrequin selon la revendication 1, **caractérisé en ce que** ladite entaille (4) s'étend en décrivant un angle d'ouverture α entre 30° et 150°, de préférence entre 60° et 120°.

3. Vilebrequin selon la revendication 2, **caractérisé en ce que** la profondeur de ladite entaille (4) diminue en continu en allant vers les bords de l'entaille (4)

4. Vilebrequin selon l'une quelconque des revendications 1 à 3, **caractérisé en ce que**, sur une coupe imaginaire du flasque (2) du vilebrequin et du maneton (1) et/ou du tourillon (12), de préférence dans la zone de la plus grande profondeur (9) de l'entaille (4), ladite entaille (4) présente sensiblement la forme d'un segment d'arc de cercle (5).

5. Vilebrequin selon la revendication 4, **caractérisé en ce que** le rayon (6) du segment d'arc de cercle (5) est supérieur au rayon (7) de la zone de transition (3, 3') arrondie.

6. Vilebrequin selon la revendication 4 ou 5, **caractérisé en ce que** la distance (8) entre le centre du segment d'arc de cercle (5) et le flasque (2) du vilebrequin est inférieure ou égale à la somme du rayon (7) de la zone de transition (3, 3') arrondie et du demi-rayon (6) du segment d'arc de cercle (5).
